# EUROPEAN PATENT APPLICATION

(11) **EP 2 843 729 A1**
(43) Date of publication of application: **04.03.2015**
(21) Application number: 14182713.9
(22) Date of filing: 28.08.2014
(51) Int. Cl.: H01M 2/10, H01M 2/12, H01M 10/04

(54) **Battery module**

(30) Priority: 28.08.2013 KR 20130102081
(71) Applicant: Samsung SDI Co., Ltd., Yongin-si, Gyeonggi-do (KR)
(72) Inventor: Jung, Hyun-Min, Gyeonggi-do (KR)
(74) Representative: Mounteney, Simon James

(57) **Abstract**

A battery module (100a,100b,100c) including a plurality of battery cells (110) aligned in one direction, each battery cell of the plurality of battery cells including a terminal portion (111) on one surface thereof; and a housing (120a,120b,120c) on outer surfaces of the plurality of battery cells (110), wherein the housing (120a,120b,120c) includes a bias portion (124a,124b,124c) on at least one surface thereof, the bias portion protruding toward one battery cell of the plurality of battery cells.

## Description

### BACKGROUND

### 1. Field

The invention relates to a battery module.

### 2. Description of the Related Art

A high-power battery module using a non-aqueous electrolyte with high energy density has recently been developed. The high-power battery module may be configured as a large-capacity battery module manufactured by connecting a plurality of battery cells in series so as to be used in driving motors of devices requiring high power, e.g., electric vehicles and the like. Further, a battery pack may be configured by electrically connecting such a plurality of battery modules to one another.

As the number of devices employing battery modules increases, improving the productivity of the battery module has been considered. As the external appearance of the devices is diversified, the shape of battery modules may be varied. However, safety of the battery module should be basically secured. Therefore, the structure of a battery module capable of satisfying all the requirements have been considered in various fields.

A bus-bar may be used as a member that connects a plurality of battery cells. However, if a height difference exists between battery cells, close adhesion or coupling between electrode terminals of the battery cells may not be precisely made.

### SUMMARY

The present invention sets-out to overcome the abovementioned problems of the prior art.

The invention may be realized by providing a battery module including a plurality of battery cells aligned in one direction, each battery cell of the plurality of battery cells including a terminal portion on one surface thereof; and a housing on outer surfaces of the plurality of battery cells, wherein the housing includes a bias portion on at least one surface thereof, the bias portion protruding toward one battery cell of the plurality of battery cells.

The bias portion may have elasticity.

The bias portion may have a through-region in a portion thereof that contacts the battery cell.

The bias portion may have a recessed portion in a portion thereof that contacts the battery cell.

The bias portion may face another surface of one of the battery cells, the other surface being opposite to the one surface that has the terminal thereon.

The housing may further include a pair of end plates that respectively contact outermost battery cells of the plurality of battery cells; and an accommodating portion coupled with the pair of end plates, the accommodating portion surrounding another surface of one of the battery cells, the other surface being opposite to the one surface, and side surfaces that connect between the one surface and the other surface of the one battery cell.

The bias portion may be in the accommodating portion.

The housing may further include a top plate that covers the one surface of the one battery cell.

The plurality of battery cells may be pressed to the top plate by elastic force from the bias portion.

The bias portion may face a side surface of a battery cell of the plurality of battery cells.

The bias portion may be elastically biased toward the plurality of battery cells.

At least some of the above and other features of the invention are set-out in the claims.

Embodiments of the invention may therefore provide a battery module in which battery cells are firmly supported, e.g., fixed in position to not be moved, thereby improving the safety of the battery module.

According to an embodiment, a battery cell may be elastically supported by forming the bias portion that protrudes toward the battery cell on at least one surface of a housing, so that it is possible to help prevent the movement of the battery cell, thereby improving the safety of the battery module.

### BRIEF DESCRIPTION OF THE DRAWINGS

Features of the invention will be made more apparent to those of skill in the art by describing in detail embodiments thereof with reference to the attached drawings in which:
FIG. 1 illustrates a perspective view of a battery module according to an embodiment of the invention.
FIG. 2 illustrates an exploded perspective view of the battery module shown in FIG. 1.
FIG. 3 illustrates a sectional view of the battery module shown in FIG. 1.
FIG. 4 illustrates a sectional view of a battery module according to another embodiment of the invention.
FIG. 5 illustrates a sectional view of a battery module according to still another embodiment of the invention.
FIG. 6 illustrates an exploded perspective view of a battery module according to still another embodiment of the invention.

### DETAILED DESCRIPTION

Example embodiments of the invention will now be described more fully hereinafter with reference to the accompanying drawings; however, they may be embodied in different forms and should not be construed as limited to the embodiments set forth herein. Rather, these embodiments are provided so that this disclosure will be thorough, and will convey implementations to those skilled in the art.

In the drawing figures, the dimensions of layers and regions may be exaggerated for clarity of illustration. Like reference numerals refer to like elements throughout.

In addition, when an element is referred to as being "on" another element, it can be directly on the other element or be indirectly on the another element with one or more intervening elements interposed therebetween. Also, when an element is referred to as being "connected to" another element, it can be directly connected to the other element or be indirectly connected to the other element with one or more intervening elements interposed therebetween.

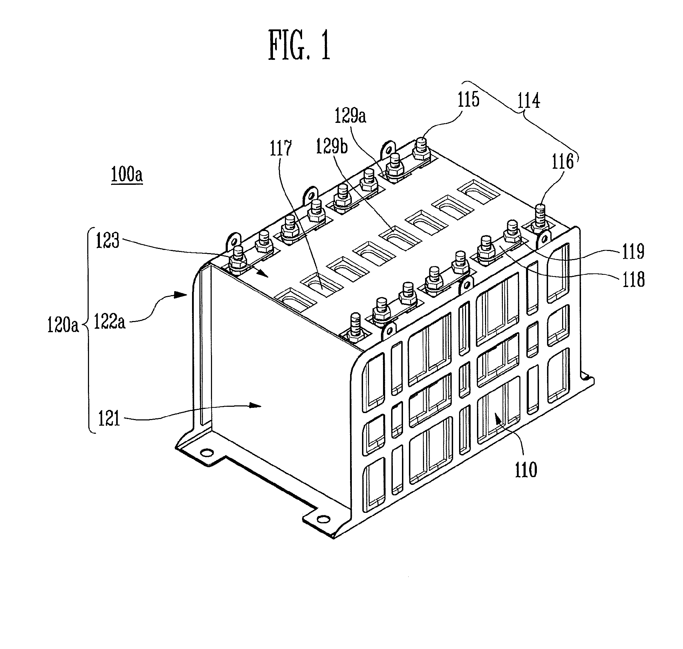

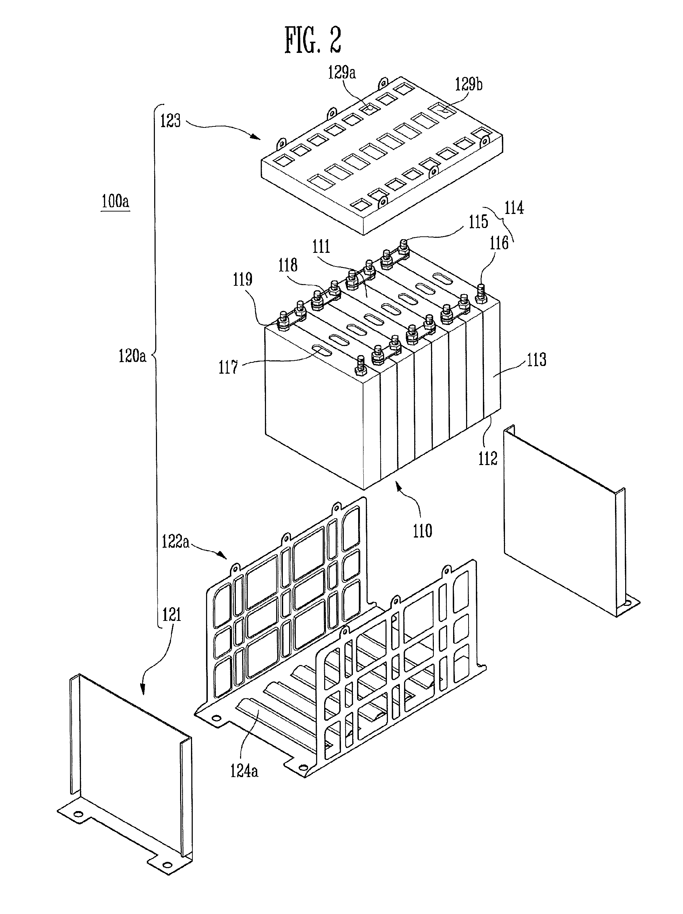

FIG. 1 illustrates a perspective view of a battery module 100a according to an embodiment of the invention. FIG. 2 illustrates an exploded perspective view of the battery module 100a shown in FIG. 1. Hereinafter, the battery module 100a according to this embodiment will be described with reference to FIGS. 1 and 2.

As shown in FIGS. 1 and 2, the battery module 100a may include a plurality of battery cells 110 (aligned in one direction) and a housing 120a on outer surfaces of the plurality of battery cells 110. A bias portion 124a (protruding toward a battery cell 110 of the plurality of battery cells 110) may be formed on at least one surface of the housing 120a.

The battery cell 110 may be a member that generates energy. The plurality of battery cells 110 may be aligned in one direction.

Each battery cell 110 may include a battery case (having one open side), and an electrode assembly and an electrolyte (which are accommodated in the battery case). For example, the electrode assembly and the electrolyte may generate energy through an electrochemical reaction therebetween. The battery case may be hermetically sealed at one surface 111 (e.g., top surface) of the battery cell 110 by, e.g., a cap assembly. In addition, a terminal portion 114, e.g., positive and negative electrode terminals 115 and 116 having different polarities, may protrude from the one surface 111 of the battery cell 110. A vent portion 117 (acting as a passage through which gas generated in the battery cell 110 is exhausted to the outside of the battery cell 110) may be further formed as a safety device of the battery cell 110 in the one surface 111 of the battery cell 110. The terminal portions 114 of adjacent battery cells 110 among the plurality of battery cells 110 may be electrically connected through a bus-bar 118. The bus-bar 118 may be fixed to the terminal portion 114 by a fixing means or fixer 119 such as a nut. The battery cell 110 may include the one surface 111 (from which the terminal portion 114 protrudes), another surface 112 (e.g., a top surface that is opposite to the one surface 111), and side surfaces 113 (connecting between the one surface 111 and the other surface 112).

The housing 120a may be a member that is disposed on outer surfaces of the plurality of battery cells 110 to fix an alignment state of the plurality of battery cells 110. The bias portion 124a (protruding toward the battery cell 110) may be formed on at least one surface of the housing 120a.

The housing 120a may include, e.g., at least one end plate 121, an accommodating portion 122a, and a top plate 123. The at least one end plate 121 may include a pair of end plates 121 that respectively contact wide surfaces of outermost battery cells 110 among the plurality of battery cells 110. For example, the end plates 121 may be formed of an SUS plate or plastic. The accommodating portion 122a may surround the other surface 112 (opposite to the one surface 111) of the battery cell 110 and the side surfaces 113 of the battery cell 110 so as to accommodate the plurality of battery cells 110. In addition, a plurality of openings may be formed in the accommodating portion 122a, and accordingly, it is possible to facilitate heat dissipation and to decrease the weight of the accommodating portion 122a. The accommodating portion 122a and the end plates 121 may be coupled to each other. In coupling the accommodating portion 122a and the end plates 121, the accommodating portion 122a and one surface of the end plates 121 may form an opened box shape to accommodate the battery cells 110. In this case, the coupling between the end plates 121 and the accommodating portion 122a may be implemented through, e.g., snap-fit coupling, bolt-screw coupling, welding, or the like.

The top plate 123 may cover the one surface 111 of the battery cell 110. The top plate 123 may be coupled to the end plates 121 and/or the accommodating portion 122a. Therefore, if the top plate 123 is coupled to the end plates 121 and/or the accommodating portion 122a, the housing 120a may surround all surfaces of the plurality of battery cells 100, e.g., the one surface 111, the other surface 112, and the side surfaces 113 of each battery cell 110 of the plurality of battery cells 110. First and second openings 129a and 129b may be formed in the top plate 123. The terminal 114 of the battery cell 110 may be inserted into the top plate 123 through the first opening 129a to be exposed to the outside of the top plate 123, and the vent portion 117 may be exposed to the outside of the top plate 123 through the second opening 129b. The bus-bar 118 may be placed at an upper portion of the top plate 123 to electrically connect between the terminals 114 exposed to the outside of the top plate 123 through the first openings 129a.

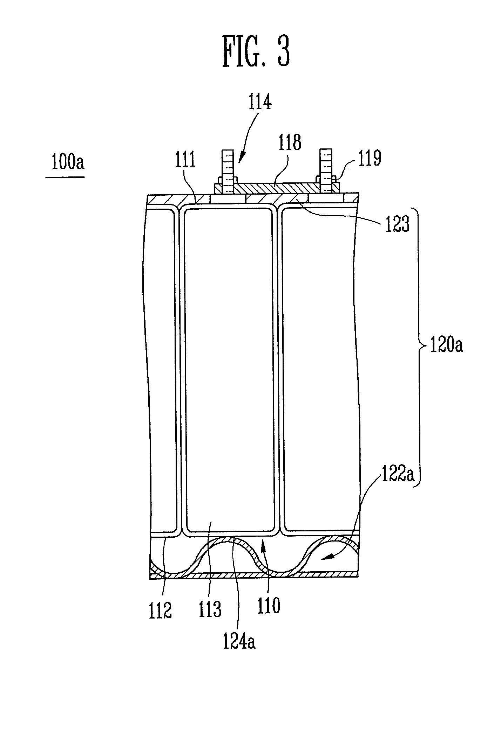

FIG. 3 illustrates a sectional view of the battery module 100a shown in FIG. 1. Hereinafter, the bias portion 124a of the battery module 100a according to this embodiment will be described in detail with reference to FIG. 3.

As shown in FIG. 3, the bias portion 124a may be formed in the housing 120a. The bias portion 124a may protrude toward one battery cell 110 of the plurality of battery cells 110. For example, the bias portion 124a may be formed in the accommodating portion 122a. In this embodiment, the bias portion 124a may protrude to face and contact the other surface 112 (e.g., bottom surface) of the battery cell 110. In an implementation, a number of bias portions 124a may be the same as a number of the battery cells 110 in the battery module to correspond to the respective battery cells 110. For example, each battery cell 110 of the plurality of battery cells 110 may correspond with one bias portion 124a. The bias portion 124a may have an area that approximately similar to that of or about the same as an area of the other surface 112 of the battery cell 110.

In this embodiment, bias portion 124a has elasticity, and is therefore elastically biased in a direction toward the plurality of battery cells 110. Accordingly, the other surface 112 (e.g., bottom surface) of the battery cell 110 may be elastically supported by the bias portion 124a. Thus, when the top plate 123 is placed on the one surface 111 of the battery cell 110, the one surface 111 of the battery cell 110 may be adhered closely to or pressed into the top plate 123 by the elasticity of the bias portion 124a. Accordingly, the one surface 111 and/or the other surface 112 of each battery cell 110 in the battery module 100a may be adhered closely to or pressed by the bias portion 124a to help prevent the movement of the battery cell 110, thereby decreasing the possibility that the battery cell 110 will be damaged by an impact or the like. The bias portion 124a may absorb an external impact or the like. Accordingly, it is possible to help minimize the impact applied to the battery cell 110. For example, even if the sizes of the battery cells 110 were to be different, each bias portion 124a may be elastically biased toward the battery cells 110, so that a degree of protruding of the bias portion 124a may be controlled or affected according to the size of the battery cell 110. Hence, surfaces, e.g., the one surface 111 and/or the other surface 112, of each battery cell 110 may be stably supported. Thus, it is possible to use the housing 120a, regardless of the sizes (e.g., and variations thereof) of the plurality of battery cells 110 in the battery module 100a.

Although the elastic bias of the bias portions is achieved in the above embodiment by the elasticity of the bias portions themselves (e.g. by formation from a resilient material), the invention is not limited in this regard. Therefore, the bias portions could also be formed from a non-resilient material but be elastically biased towards the battery cells in some other manner, such as by an additional resilient member.

As described above, in an implementation, the bias portion 124a may be formed in the accommodating portion 122a to face the other (e.g., bottom) surface 112 of the battery cell 110. In an implementation, the bias portion 124a may be formed in the top plate 123 to face the one (e.g., top) surface 111 of the battery cell 110. In this case, all surfaces, e.g., the one (e.g., top) surface 111 and the other (e.g., bottom) surface 112, of the battery cell 110 may be elastically supported by the bias portion 124a, so that the battery module 100 may be less influenced by an external impact. Further, it is possible to more effectively minimize mechanical tolerance.

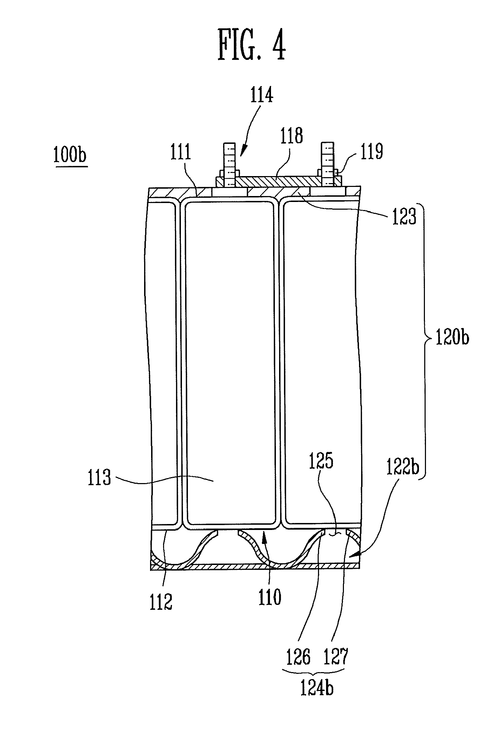

FIG. 4 illustrates a sectional view of a battery module 100b according to another embodiment of the invention. Hereinafter, the battery module 100b according to this embodiment will be described with reference to FIG. 4. Components identical or corresponding to those of the aforementioned embodiment are designated by like reference numerals, and repeated detailed descriptions thereof may be omitted to avoid redundancy.

The battery module 100b according to the present embodiment may include a plurality of battery cells 110 and a housing 120b. Each bias portion 124b formed in the housing 120b, e.g., in an accommodating portion 122b, may have a through-region 125. For example, as shown in FIG. 4, the through-region 125 may be formed in a region of the bias portion 124b that contacts the battery cell 110. For example, the bias portion 124b may include a first bias portion 126 at one side thereof and a second bias portion 127 at another side thereof, based on or about the through-region 125. An end of each of the first and second bias portions 126 and 127 may be a free end, and the elasticity of the bias portion 124b may be increased, as compared with that in the aforementioned embodiment. Accordingly, the bias portion 124b may effectively support the other (e.g., bottom) surface 112 of the battery cell 110.

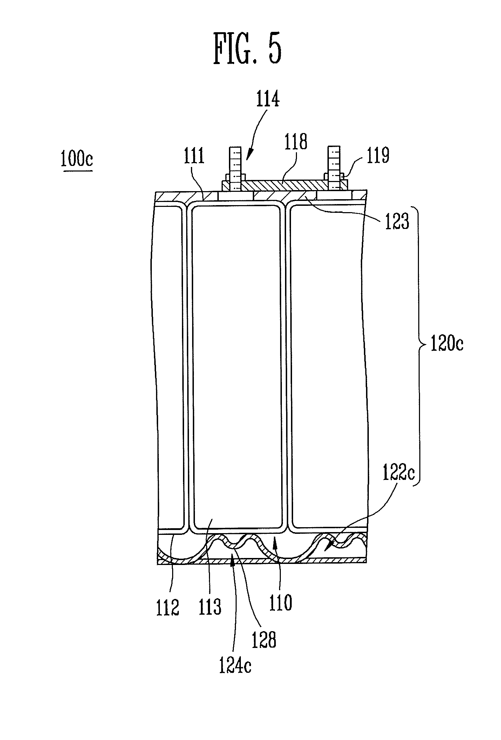

FIG. 5 illustrates a sectional view of a battery module 100c according to still another embodiment of the invention. Hereinafter, the battery module 100c according to this embodiment will be described with reference to FIG. 5. Here, components that are identical or corresponding to those of the aforementioned embodiment are designated by like reference numerals, and repeated detailed descriptions may be omitted to avoid redundancy.

The battery module 100c according to the present embodiment may include a plurality of battery cells 110 and a housing 120c. Each bias portion 124c in an accommodating portion 122c of the housing 120c may have a recessed region 128. For example, as shown in FIG. 5, the recessed region 128 may be formed in a region of the bias portion 124c that contacts the battery cell 110. Therefore, a shape of the bias portion 124c may be entirely or doubly protruded, and a central region of the bias portion 124c may have a concave shape. The recessed region 128 may be provided in the bias portion 124c, and the elasticity of the bias portion 124c may be increased. For example, a contact area between the bias portion 124c and the battery cell 110 may be doubled. Accordingly, the battery cells 110 may be effectively supported by the elasticity of the bias portion 124c.

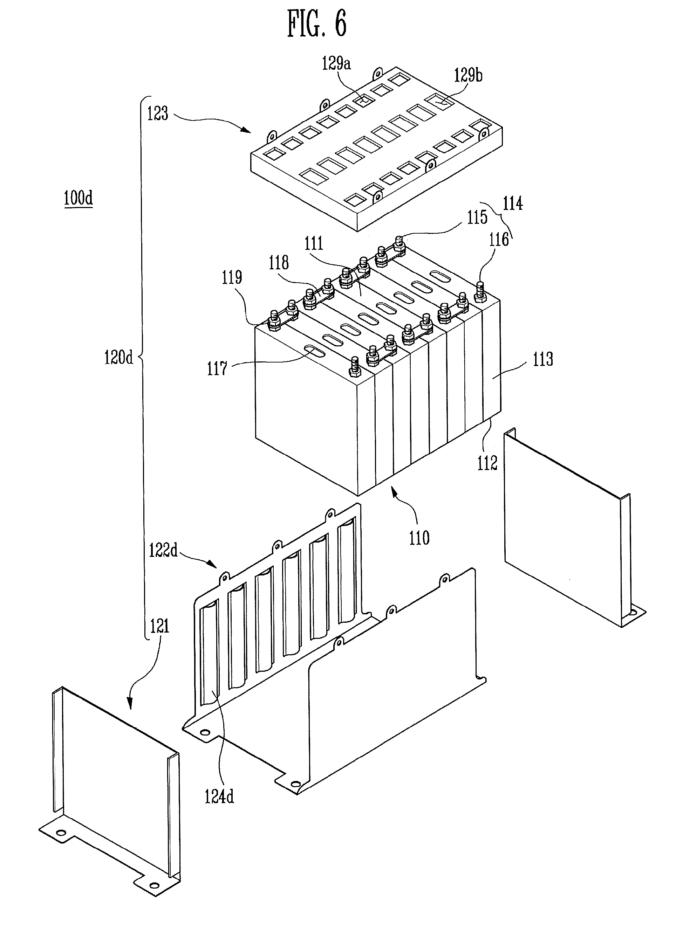

FIG. 6 illustrates an exploded perspective view of a battery module 100d according to still another embodiment of the invention. Hereinafter, the battery module 100d according to this embodiment will be described with reference to FIG. 6. Here, components that are identical or corresponding to those of the aforementioned embodiment are designated by like reference numerals, and repeated detailed descriptions may be omitted to avoid redundancy.

The battery module 100d according to the embodiment may include a plurality of battery cells 110, and a housing 120d that includes a pair of end plates 121, an accommodating portion 122d, and a top plate 123. Each bias portion 124d may protrude to face a side surface 113 of one of the battery cells 110. The protruding portion 124d may respectively protrude from inner surfaces of the accommodating portion 122d to face side surfaces 113 of one of the battery cells 110. Accordingly, the side surfaces 113 of the battery cell 110 may be elastically supported. Thus, even if the battery module is subjected to an impact in a lateral direction, it is possible to stably drive the battery module 100d.

As noted above, in an implementation, the bias portion 124d may be formed in the accommodating portion 122d. In an implementation, the bias portion 124d may be also or alternatively formed in at least one of the end plates 121. In this case, only wide surfaces of the outermost battery cells 110 may be elastically supported or pressed by the bias portion 124d.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module, comprising:
a plurality of battery cells aligned in one direction, each battery cell of the plurality of battery cells including a terminal portion on a first surface thereof; and
a housing on outer surfaces of the plurality of battery cells,
wherein the housing includes at least one bias portion on at least one surface thereof, the or each bias portion protruding toward at least one of battery cell of the plurality of battery cells.

2. A battery module as claimed in claim 1, wherein at least one said bias portion has elasticity.

3. A battery module as claimed in claim 1, wherein at least one said bias portion has a through-region in a portion thereof that contacts the battery cell.

4. A battery module as claimed in claim 1, 2 or 3, wherein at least one said bias portion has a recessed portion in a portion thereof that contacts the battery cell.

5. A battery module as claimed in any preceding claim, wherein at least one said bias portion faces a second surface of one of the battery cells, the second surface being opposite to the first surface.

6. A battery module as claimed in any preceding claim, wherein the housing further includes:
a pair of end plates that respectively contact outermost battery cells of the plurality of battery cells; and
an accommodating portion coupled with the pair of end plates, the accommodating portion surrounding:
a second surface of one of the battery cells, the second surface being opposite to the first surface, and
side surfaces that connect between the first surface and the second surface of the one battery cell.

7. A battery module as claimed in claim 6, wherein at least one said bias portion is in the accommodating portion.

8. A battery module as claimed in any preceding claim, wherein the housing further includes a top plate that covers the first surface of the one battery cell.

9. A battery module as claimed in claim 8, wherein the plurality of battery cells are pressed towards the top plate by elastic force from the at least one said bias portion.

10. A battery module as claimed in any preceding claim, wherein at least one said bias portion faces a side surface of a battery cell of the plurality of battery cells.

11. A battery module as claimed in any preceding claim, wherein at least one said bias portion is elastically biased toward the plurality of battery cells.
